Europäisches Patentamt

(19) European Patent Office

Office européen des brevets

(11) Veröffentlichungsnummer: **0 024 586**

**A1**

(12) **EUROPÄISCHE PATENTANMELDUNG**

(21) Anmeldenummer: **80104620.2**

(22) Anmeldetag: **06.08.80**

(51) Int. Cl.³: **G 01 N 21/89**

(30) Priorität: **11.08.79 DE 2932660**

(43) Veröffentlichungstag der Anmeldung:
**11.03.81 Patentblatt 81/10**

(84) Benannte Vertragsstaaten:
**BE CH FR IT LI NL SE**

(71) Anmelder: **Feldmühle Aktiengesellschaft**
**Fritz-Vomfelde-Platz 4**
**D-4000 Düsseldorf 11(DE)**

(72) Erfinder: **Haubold, Wolfgang**
**Am Gottesberg 58**
**D-4800 Bielefeld 1(DE)**

(74) Vertreter: **Uhlmann, Hans, Dr. rer.nat., Dipl.-Chem.**
**Gladbacher Strasse 189**
**D-4060 Viersen 1(DE)**

(54) **Verfahren zum Definieren der Fehlerart.**

(57) Schnellaufende Materialbahnen (9) werden mittels eines fliegenden Lichtpunktes abgetastet, der ausgehend von einem Laserstrahler (lo) über ein Spiegelrad (11) quer zur Laufrichtung der Materialbahn (9) sich bewegt. Der reflektierte Strahl (13) fällt in einen Fotomultiplier (14) und wird der elektronischen Auswertestufe (15) zugeführt. In der Materialbahn (9) enthaltene Fehler (16) erzeugen ein Signal, wodurch ein Blitz ausgelöst wird, der die den Fehler (16) aufweisende Stelle der Materialbahn (9) beleuchtet. Eine Fernsehkamera (5) nimmt das Bild (17) des Fehlers auf, das im Monitor (8) sichtbar wird, bei gleichzeitiger Speicherung im Videorekorder (6). Der Monitor (8) zeigt das Bild (17) des Fehlers durch optisches oder elektrisches Zoom vergrößert.

Fig. 1

0024586

BEZEICHNUNG GEÄNDERT
siehe Titelseite

Anmelder: Feldmühle Aktiengesellschaft,
Fritz-Vomfelde-Platz 4, 4ooo Düsseldorf 11

Verfahren und Vorrichtung zum Definieren
der Fehlerart.

Die Erfindung betrifft ein Verfahren und eine Vorrichtung zum Definieren der Fehlerart beim Abtasten
von schnellaufenden, bahnförmigen Flächengebilden
mittels eines fliegenden Lichtpunktes, der das Flächengebilde quer zur Laufrichtung abtastet und dessen das Flächengebilde durchdringender und/oder reflektierter Lichtanteil ausgewertet wird, wobei Fehler in der Materialbahn ein Signal auslösen.

Vorrichtungen zum Abtasten von bahnförmigen Flächengebilden sind in einer Vielzahl bekannt und beispielsweise in den DE-OS 14 73 681; 15 73 497;
24 11 4o7 vorbeschrieben. Sie bestehen im allgemeinen aus einer Lichtquelle, die als Laserstrahler
ausgeführt sein kann, einem rotierenden Spiegelrad,
auf das die Lichtquelle einen Abtaststrahl wirft,
wobei das Spiegelrad den Strahl über die Gesamtbrei-

- 2 -

te der zu prüfenden Materialbahn leitet. Das reflektierte oder durchgelassene Licht des durch das Spiegelrad erzeugten, fliegenden Lichtpunktes wird einem fotoelektrischen Wandler zugeführt, der auf unterschiedliche Helligkeit des reflektierten oder durchgelassenen Lichtes anspricht und dessen Ausgangssignale einer Auswertestufe zugeführt werden.

Diese Auswertestufe dient im allgemeinen dazu, Impulse für Markiergeräte auszulösen, oder führt diese Impulse Schaltaggregaten zu, die Ausscheidungen - nach Unterteilung der Bahn in einzelne Abschnitte - durch das Schalten von Weichen ermöglicht. Damit war es bisher nur möglich, entweder den fehlerhaften Stapel von zu Blättern geschnittenen Materialbahnen zu überprüfen oder eine ganze Rolle einer Materialbahn nach ihrer Fertigung abzurollen, um den jeweils auftretenden Fehler zu finden und zu definieren. Für die kontinuierliche Fertigung von Materialbahnen ist es aber von hoher Bedeutung, möglichst frühzeitig zu erkennen, wo in der Fertigung ein Fehler auftritt, um damit insbesondere diese kontinuierlich sich auf oder in der Materialbahn wiederholenden Fehler ausscheiden zu können, d.h., ihre Ursache zu beheben.

Als Flächengebilde, bzw. Materialbahn im Sinne der vorliegenden Anmeldung sind dabei Papier-, Karton- und Gewebebahnen zu verstehen, ebenso Folien aus Kunststoff oder Metall, sowie Glasbahnen und Bleche. Alle diese Materialien werden mit sehr hoher Geschwindigkeit erzeugt, die beim Papier und auch beim Blech, sowie bei den Folien bei über 1ooo m/Min. liegen können, wodurch ein Betrachten eines einzelnen Fehlers in der laufenden Bahn absolut unmöglich

- 3 -

ist.

Aufgabe der Erfindung ist, hier Abhilfe zu schaffen und eine Vorrichtung, bzw. ein Verfahren aufzuzeigen, das eine Betrachtung eines solchen Fehlers in der laufenden Materialbahn ermöglicht, wodurch der Fehler definiert und seine Quelle eingegrenzt werden kann.

Gelöst wird diese Aufgabe durch ein Verfahren zum Definieren der Fehlerart beim Abtasten von schnell-laufenden, bahnförmigen Flächengebilden mittels eines fliegenden Lichtpunktes, der das Flächengebilde quer zur Laufrichtung abtastet und dessen das Flächengebilde durchdringender und/oder reflektierter Lichtanteil ausgewertet wird, wobei Fehler in der Materialbahn ein Signal auslösen, dadurch, daß durch das Signal ein Blitz ausgelöst wird, der die den Fehler aufweisende Stelle der Bahn beleuchtet der dadurch sichtbare Fehler erfaßt, aufgezeichnet und sein Bild einem Monitor zugeleitet wird.

Es wäre theoretisch denkbar, eine laufende Materialbahn mit einem sehr hohen Lichtvolumen auszuleuchten und diese Materialbahn kontinuierlich zu filmen, um dadurch zu einem Abbild eines Fehlers in der Materialbahn zu gelangen. Abgesehen davon, daß es aber kolossal aufwendig ist, die Materialbahn kontinuierlich zu beleuchten und zu filmen, wird auch die Auswertung erheblich verzögert, wenn die schnellaufende Materialbahn als Film mit erheblich reduzierter Geschwindigkeit von einem Kontrolleur betrachtet wird, um dadurch zu einer Aussage über Fehlerinhalte zu kommen. Die Aussage über die einzelnen Fehler kann aufgrund einer solchen Methode nur sehr spät erfolgen, so daß bereits eine Vielzahl von Material verdorben ist. Dem gegenüber bietet das erfindungsgemäße Verfahren den Vorteil, daß nicht die gesamte Bahn, sondern lediglich die fehlerhaften Teile dieser Bahn erfaßt werden, desweiteren nur ein Blitz zum Ausleuchten der Materialbahn benötigt wird und nicht eine dauernd brennende Lichtquelle mit hoher Lichtintensität. Da nur die Fehler aufgezeichnet werden und über einen Monitor abrufbar sind, ist die direkte Kontrolle der laufenden Materialbahn möglich, d.h., daß durch das kontinuierliche Auftauchen des gleichen Fehlers im gleichen Abstand sehr schnell auf den Ort der Fehlererzeugung geschlossen werden kann.

Eine bevorzugte Ausgestaltung der Erfindung sieht vor, daß der Fehler auf einem Monitor vergrößert dargestellt wird. Die vergrößerte Darstellung kann gemäß einer besonders vorteilhaften Ausgestaltung der Erfindung durch ein sogenanntes elektrisches Zoom erfolgen, ebenso können zweckmäßig Zoomoptiken an der Aufnahmekamera verwandt werden. Auch die Kombination von elektrischem und optischem Zoom ist möglich. Die vergrößerte Darstellung des Fehlers auf dem Monitor ermöglicht eine genauere Beurteilung, also ein genaueres Definieren des Fehlers und ist besonders für relativ kleinflächige Fehler von Bedeutung, wie sie als Einprägungen von Partikeln, die sich auf Walzen festgesetzt haben, häufig vorkommen.

- 5 -

Das Beleuchten des Fehlers des schnellaufenden
bahnförmigen Flächengebildes erfolgt gemäß einer
sehr vorteilhaften Ausgestaltung der Erfindung
durch eine Stroboskoplampe mit Xenonfüllung.
Die Stroboskoplampe garantiert dafür, daß sehr kurze Lichtblitze ausgesandt werden, die auch bei
hoher Geschwindigkeit der zu prüfenden Materialbahn für nur eine momentane Belichtung der Bahn
sorgen und damit Bewegungsunschärfen auf dem Bild
des Monitors ausschalten. Die Xenonfüllung sorgt
auf der anderen Seite dafür, daß die Lichtintensität so hoch ist, daß eine kurze Belichtung überhaupt erst ermöglicht wird. Die Dauer des Lichtblitzes beträgt ca. lo µ sek, wobei der Blitz weit
über loo x pro sek ausgelöst werden kann, d.h.,
daß auch schnell hintereinander auftretende Fehler
noch mit Sicherheit erfaßt und registriert werden
können. Selbstverständlich können, insbesondere
wenn breite Bahnen auf Fehler abgetastet werden,
mehrere Stroboskope nebeneinander angeordnet sein,
so daß jedes Stroboskop nur einen Teil der Bahn
ausleuchtet und dadurch die hohe Lichtintensität
gewährleistet ist.

Gemäß einer besorzugten Ausgestaltung der Erfindung
erfolgt die Erfassung der Fehler mit einer Video-
Kamera, die vorzugsweise mit einem Bleioxidvidikon
ausgerüstet ist. Durch das Bleioxidvidikon sind
die sogenannten Nachzieheffekte weitgehend ausgeschaltet, wodurch die Kamera für die extrem hohen
Anforderungen, die aufgrund der hohen Materialbahngeschwindigkeit auftreten, besonders geeignet ist.

Eine weitere zweckmäßige Ausgestaltung der Erfindung sieht vor, daß die Kamera mit einem Monitorsucher versehen ist. Die Ausrüstung der Kamera mit einem Monitorsucher ist dann besonders sinnvoll, wenn ohne Fernsteuerung der Kamera gearbeitet wird, die Kamera also, beispielsweise um eine besondere Stelle in der Breite der Materialbahn zu untersuchen, von Hand geführt und ausgerichtet wird.

Bevorzugt ist die Videokamera mit einem rotierenden Blendenverschluß bestückt, der die Belichtung zwischen 1/1ooo und 1/1Oooo sek ermöglicht. Die Wahl der Belichtungszeiten ist selbstverständlich abhängig von der Bahngeschwindigkeit, wobei hohe Bahngeschwindigkeiten eine extrem kurze Belichtungszeit erfordern, um Bewegungsunschärfen zu vermeiden. Selbstverständlich wird man stets die längste Belichtungszeit wählen, die für den jeweiligen Prozeß möglich ist, um dadurch die erforderliche Lichtstärke der Beleuchtungskörper, also des Stroboskops herabzusetzen.

Die Aufzeichnung der erfaßten Fehler erfolgt gemäß einer bevorzugten Ausgestaltung der Erfindung durch einen Magnetbandrekorder. In diesen Rekorder werden zweckmäßigerweise auch gleich Impulse eingespeist, aus denen sich der Abstand zwischen den einzelnen Fehlern entnehmen läßt, so daß periodisch auftretende Fehler leichter erkannt werden können und man vor allen Dingen aus dem Abstand zwischen einem Fehlersignal und dem anderen, also der Bahnlänge, die zwischen zwei Fehleranzeigen liegt, auf den Ursprung des Fehlers schließen kann.

- 7 -

Die Erfindung wird nachstehend an Hand der Zeichnungen erläutert:

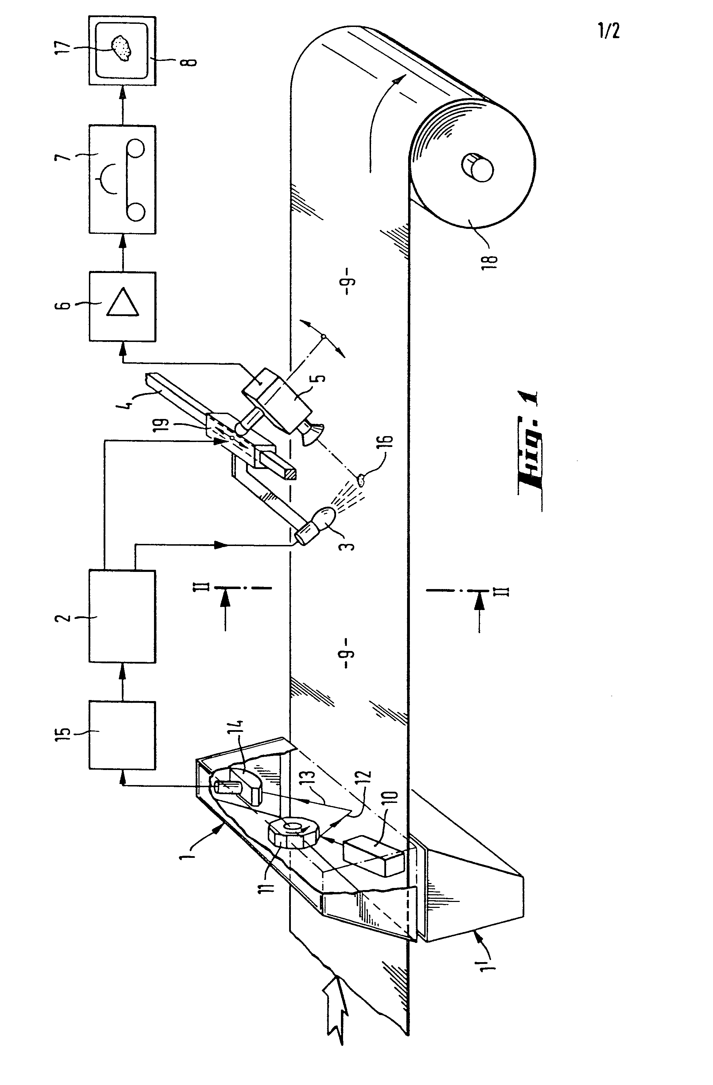

Fig. 1 zeigt schematisch den Aufbau einer Fehlererkennvorrichtung,

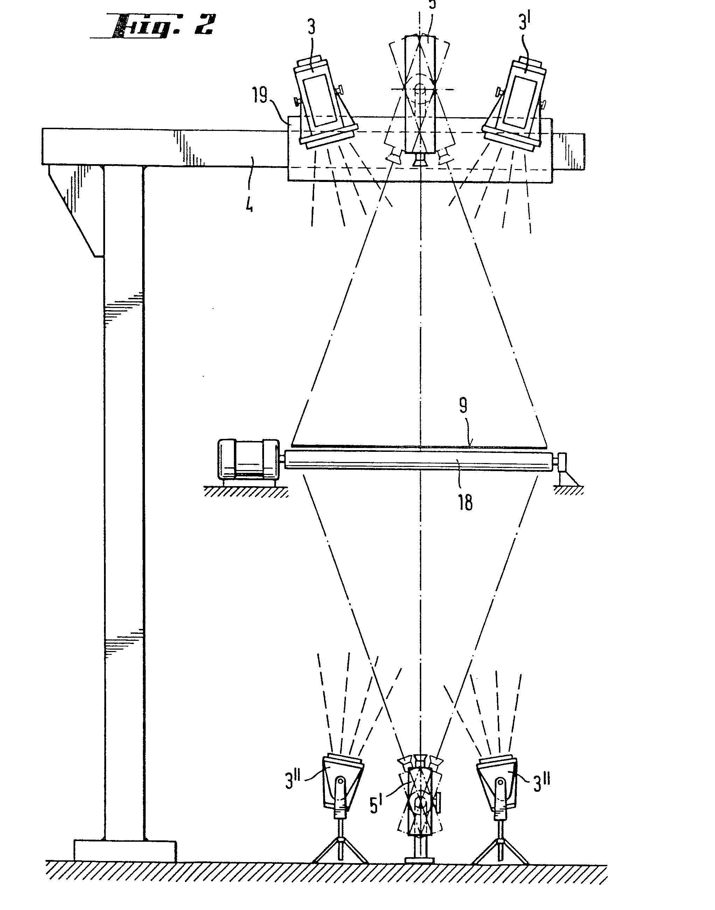

Fig. 2 als Ausschnitt daraus den Aufnahmebereich.

Eine Materialbahn 9 aus Aluminiumfolie wird von der Erzeugungsanlage kommend der Inspektionsanlage 1 zugeführt, abgetastet und auf Fehler überprüft. Die erhaltenen Signale werden der Fehlerverschleppeinrichtung 2 zugeführt, die die hinter der Inspektionsanlage angeordnete Blitzlampe 3 und die Fernsehkamera 5 auslöst. Das Videosignal der Kamera 5 wird in dem Abtastverstärker 6 verstärkt und dem Videorekorder 7 zur Speicherung des einzelnen Bildes zugeführt. Der Monitor 8 gibt das gespeicherte Bild wieder, das sowohl gleichzeitig mit der Aufzeichnung als auch zu beliebigen Zeitpunkten nach der Aufzeichnung auf Abruf sichtbar gemacht werden kann.

Die Materialbahn 9 enthält den Fehler 16, der von der Inspektionsanlage 1 erfaßt wurde. Der Laserstrahler lo sandte dazu einen Abtaststrahl 12 auf das Spiegelrad 11, das mit hoher Geschwindigkeit rotiert. Der Abtaststrahl 12 wird dadurch über die gesamte Breite der Materialbahn 9 geführt, und von dieser reflektiert. Der reflektierte Strahl 13 fällt in den Fotomultiplier 14, von wo er als Impuls der elektronischen Auswertestufe 15 zugeführt wird. Die elektronische Auswertestufe 15 differenziert die Fehler und entscheidet, welcher Fehler als solcher von der Anlage erfaßt wird und welcher Fehler so minimal ist, daß er in der Bahn ohne Qualitätseinbuße verbleiben kann.

Das sich in der elektronischen Auswertestufe 15 ergebende Fehlersignal wird der Fehlerverschleppeinrichtung 2 zugeleitet, die ebenfalls elektronisch arbeitet, und das Verfahren der Fernsehkamera 5, die zeitrichtige Auslösung der Kamera 5 und des elektronischen Blitzes 3 steuert. Die Fernsehkamera 5 ist schwenk- und verschiebbar auf einem Schlitten 19 angeordnet, der auf einem Holm 4 gleitet. Bei sehr großen Bahnbreiten nimmt der Schlitten 19 gleichzeitig auch die elektronischen Blitzvorrichtungen 3 und 3' auf, die rechts und links von der Kamera 5 angeordnet sind. Der Schwenkwinkel der Kamera 5 beträgt 45 Grad. Um Bildverzerrungen zu vermeiden, wird er jedoch nur dann voll ausgenutzt, wenn die Verzerrung des Bildes keine wesentliche Verschlechterung der Erkennbarkeit und Definierung des Fehlers ergibt.

Für die Inspektion der Unterseite der Materialbahn 9 wird eine analoge Inspektionsanlage 1' unter der Materialbahn 9 angeordnet. Die Schaltung ist dabei identisch der bisher beschriebenen. Die Beleuchtung erfolgt durch die elektronischen Blitzvorrichtungen 3'', die Fehleraufnahme durch die Kamera 5'.

Der sich mit der Geschwindigkeit der Materialbahn 9 in Richtung der Aufwickelrolle 18 bewegende Fehler 16 wird durch die Inspektionsanlage 1 aufgespürt, durch den Blitz sichtbar gemacht und mittels der Kamera 5, 5' erfaßt. Diese Erfassung kann

- 9 -

bereits im vergrößerten Maßstab erfolgen, d.h., daß das Zoomobjektiv der Kamera 5, 5' den Fehler vergrößert erfaßt, die Vergrößerung kann jedoch auch elektronisch erfolgen, ggf. kann die elektronische Vergrößerung zusätzlich die Vergrößerung der Zoomoptik erhöhen, so daß auf dem Monitor 8 ein vergrößertes Fehlerbild 17 erscheint.

- lo -

Anmelder: Feldmühle Aktiengesellschaft,
Fritz-Vomfelde-Platz 4, 4ooo Düsseldorf 11

Patentansprüche

1. Verfahren zum Definieren der Fehlerart beim Abtasten von schellaufenden bahnförmigen Flächengebilden mittels eines fliegenden Lichtpunktes, der das Flächengebilde quer zur Laufrichtung abtastet und dessen das Flächengebilde durchdringender und/oder reflektierter Lichtanteil ausgewertet wird, wobei Fehler in der Materialbahn ein Signal auslösen, dadurch gekennzeichnet, daß durch das Signal ein Blitz ausgelöst wird, der die den Fehler aufweisende Stelle der Bahn beleuchtet, der dadurch sichtbare Fehler erfaßt, aufgezeichnet und sein Bild einem Monitor zugeleitet wird.

2. Verfahren nach Anspruch 1, dadurch gekennzeichnet, daß der Fehler auf einem Monitor vergrößert dargestellt wird.

3. Verfahren nach einem der Ansprüche 1 und 2, dadurch gekennzeichnet, daß die Vergrößerung des Bildes durch Zoomlinsen an der Kamera erfolgt.

4. Verfahren nach einem der Ansprüche 1 bis 3, dadurch gekennzeichnet, daß die Vergrößerung des Bildes auf dem Monitor durch ein elektrisches Zoom erfolgt.

5. Verfahren nach einem der Ansprüche 1 bis 4, dadurch gekennzeichnet, daß das Beleuchten des Fehlers des schnellaufenden bahnförmigen Flächengebildes durch eine Stroboskoplampe mit Xenonfüllung vorgenommen wird.

6. Verfahren nach einem der Ansprüche 1 bis 5, dadurch gekennzeichnet, daß die Blitzdauer des Stroboskopblitzes ca. lo µ sek beträgt.

7. Verfahren nach einem der Ansprüche 1 bis 6, dadurch gekennzeichnet, daß die Erfassung der Fehler mit einer Video-Kamera erfolgt.

8. Verfahren nach einem der Ansprüche 1 bis 7, dadurch gekennzeichnet, daß die Video-Kamera einen rotierenden Blendenverschluß besitzt, der Belichtungen zwischen 1/looo und 1/10ooo sek ermöglicht.

9. Verfahren nach einem der Ansprüche 1 bis 8, dadurch gekennzeichnet, daß die Video-Kamera mit einem Bleioxid Vidikon ausgerüstet ist.

lo. Verfahren nach einem der Ansprüche 1 bis 9, dadurch gekennzeichnet, daß die Kamera mit einem Suchermonitor versehen ist.

11. Verfahren nach einem der Ansprüche 1 bis lo, dadurch gekennzeichnet, daß die Aufzeichnung der erfaßten Fehler durch einen Magnetbandrekorder erfolgt.

**Fig. 1**

0024586

1/2

Fig. 2

0024586

Europäisches Patentamt

**EUROPÄISCHER RECHERCHENBERICHT**

Nummer der Anmeldung

EP 80 10 4620.2

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| A,P | DE - A1- 2 821 868 (K. SIROWATKA)<br>-- | | G 01 N 21/89 |
| A | DE - A1 - 2 638 911 (RUHRKOHLE AG)<br>-- | | |
| A | DE - A1 - 2 612 482 (HOESCH WERKE AG)<br>-- | | |
| A | MESSEN + PRÜFEN, Nr. 5, Mai 1979<br>Bad Wörishofen<br>H. DROSCHA "Mikroprozessorgesteuerte<br>Oberflächenprüfung mit definierter<br>Fehleranalyse"<br>Seiten 363 bis 364<br>---- | | |

**RECHERCHIERTE SACHGEBIETE (Int. Cl.3)**

G 01 N 21/84

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent- familie, übereinstimmendes Dokument

[X] Der vorliegende Recherchenbericht wurde für alle Patentansprüche erstellt.

| Recherchenort | Abschlußdatum der Recherche | Prüfer |
|---|---|---|
| Berlin | 10-11-1980 | SCHWARTZ |

EPA form 1503.1 06.78